(19) Europäisches Patentamt

European Patent Office

Office européen des brevets

(11) **EP 1 925 210 B1**

(12) **EUROPEAN PATENT SPECIFICATION**

(45) Date of publication and mention
of the grant of the patent:
**10.11.2010 Bulletin 2010/45**

(51) Int Cl.:
***A23G 9/34*** *(2006.01)*

(21) Application number: **07116287.9**

(22) Date of filing: **13.09.2007**

(54) **Frozen confections**

Gefrorene Süßwaren

Confections surgelées

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **22.11.2006 EP 06124561**

(43) Date of publication of application:
**28.05.2008 Bulletin 2008/22**

(73) Proprietors:
• **Unilever PLC
London
EC4Y 0DY (GB)**
Designated Contracting States:
**CY GB IE MT**
• **Unilever N.V.
3013 AL Rotterdam (NL)**
Designated Contracting States:
**AT BE BG CH CZ DE DK EE ES FI FR GR HU IS IT
LI LT LU LV MC NL PL PT RO SE SI SK TR**

(72) Inventors:
• **Johannsen, Lena, Helmtraut, Annaluise, Gertrud
Bedford, Bedfordshire MK44 1LQ (GB)**
• **Wix, Loyd
Bedford, Bedfordshire MK44 1LQ (GB)**

(74) Representative: **Clarke, Christopher John
Unilever Patent Group
Colworth House
Sharnbrook
Bedford MK44 1LQ (GB)**

(56) References cited:
**EP-A- 0 933 029      EP-A- 1 570 746
EP-A- 1 673 980      WO-A-2005/070183
US-A- 4 626 441      US-A- 4 631 196
US-A- 5 456 936      US-A1- 2005 095 336**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field of the Invention

The present invention relates to frozen confections such as ice cream, in particular to frozen confections having a low glycemic index.

### Background to the invention

Frozen confections normally contain relatively high amounts of sugar. In recent years there has been an increasing demand from consumers for frozen confections containing reduced amounts of sugar, for example because of health concerns relating to obesity, and diseases such as type 2 diabetes. The importance of limiting the content of sugars in a healthy diet has recently been highlighted by a Joint WHO/FOA Expert Committee (see "Diet, nutrition and the prevention of chronic diseases" - Report of a Joint WHO/FAO Expert Consultation, WHO Technical Report Series 916, WHO, Geneva, 2003).

Recently, there has been a particular demand for frozen confections having a low glycemic index (GI) value. The glycemic index is a measure of the blood glucose / insulin response to food consumption, i.e. how quickly the food raises the blood glucose levels. It is measured on 100 point scale, where glucose is set at 100. A low GI value means that the food produces a small rise in the blood glucose level, i.e. it releases energy slowly, which helps to suppress the feeling of hunger, reducing the temptation to snack. A low GI diet is believed to help weight loss, lower blood lipid levels and improve the body's sensitivity to insulin.

Ice creams typically have a high GI (in the range 60-80), although reduced GI ice creams are also known. For example, Norco Co-opertative Limited, New South Wales, Australia produce an ice cream containing skim milk, sucrose, inulin and cream which is stated to have a GI of 47. It is desirable to produce frozen confections having even lower GI values. This cannot be achieved by simply reducing the sugar content of frozen confections since the resulting products are too hard (because of the reduced freezing point depression) and insufficiently sweet-tasting. Therefore, there remains a need for frozen confections having lower GI and which maintain an acceptable texture and level of sweetness.

EP 0 933 029 discloses a non fat sugarless ice cream comprising 18.5% skimmed milk powder substitute (SMPS which contains 52.5% lactitol), 6.7% lactitol & 4.4% of 75% maltitol syrup. The total amount of sugar alcohol sweetener (lactitol) is 19.7%.

### Tests and Definitions

Unless defined otherwise, all technical and scientific terms used herein have the same meaning as commonly understood by one of ordinary skill in the art (e.g. in frozen confectionery manufacture). Definitions and descriptions of various terms and techniques used in frozen confectionery manufacture are found in Ice Cream, 6th Edition, Robert T. Marshall, H. Douglas Goff and Richard W. Hartel (2003), Kluwer Academic/Plenum Publishers. All percentages, unless otherwise stated, refer to the percentage by weight, with the exception of percentages cited in relation to the overrun.

Glycemic Index (GI)

Glycemic Index is defined as the incremental area under the blood glucose response curve for a portion of a test food containing 25g carbohydrate, expressed as a percentage of the response to the same amount of carbohydrate from a standard food taken by the same subject (Food and Agricultural Organization (1998), FAO Food and Nutrition Paper No. 66, Food and Agriculture, Rome, Italy). Although 50g samples are often used when measuring GI, some of the samples described below contain very low amounts of carbohydrates, so to deliver 50g carbohydrate would require a very large portion size. Using a portion containing 25g made the portion size more reasonable. The standard food used is glucose in water, and the GI is expressed relative to glucose where glucose is assigned a GI of 100. Consuming glucose results in a substantial increase in blood glucose levels, which is reflected in this GI value which is high in comparison to most foods. Glucose (sometimes also called dextrose) is a monosaccharide sugar.

GI values have been measured for a large number of food ingredients, see for example the International Table of Glycemic Index and Glycemic Load Values: 2002, American Journal of Clinical Nutrition, Vol. 76, No. 1, 5-56, 2002.

The test procedure that was used for measuring GI in the examples below is as follows. Twelve healthy, medication free subjects ranging from 18 to 60 years of age tested the frozen confections. Test sessions took place in the morning; prior to the session each subject had consumed a similar meal. Each subject received one portion of frozen confection which was consumed with 250 ml water. The control consisted of 25g glucose dissolved in 250 ml water. Each panellist was tested with the glucose standard on three different occasions and each test sample on two different occasions. The study order was randomised to remove any order effects. The subjects' blood glucose levels were measured using a Yellow Springs analyser before consumption, and then every 15 minutes after ingestion of the first spoonful for a period of 2 hours.

The blood glucose levels were plotted as a function of time (the blood glucose response curve) and the area under the curve (AUC) was calculated geometrically by applying the trapezium rule, ignoring the area beneath the baseline initial concentration. When a blood glucose value falls below the baseline, only the area above this level is included. The GI is calculated by dividing the frozen confection AUC by the control glucose AUC for each subject (expressed as a percentage), and then calculating the mean of the values of the 12 subjects.

Overrun

Overrun is defined by the following equation.

$$OR = \frac{\text{volume of frozen aerated product} - \text{volume of premix at ambient temp}}{\text{volume of premix at ambient temp}} \times 100$$

It is measured at atmospheric pressure.

Sugar alcohols

Sugar alcohols are defined as alcohols of mono- and disaccharide sugars as well as polyols based upon hydrolysed starch. They include maltitol, xylitol, sorbitol, arabitol, glycerol, mannitol, lactitol, erythritol, HSH (hydrogenated starch hydrosylate - also known as polyglycitol), isomalt, and palatinose.

Non-digestible, non-starch complex saccharides

Non-digestible, non-starch saccharides are defined as those saccharides with a metabolisable energy content of less than 3 kcal (12.6 kJ) per g of saccharide which are not derived from starch. Non-digestible, non-starch complex saccharides include inulin, oligofructose, polydextrose and kestose.

Starch derivatives

Starch derivatives are defined as mono-, oligo- and polysaccharides derived from starch. Starch derivatives include modified starches, maltodextrins, corn syrups, maltotriose, maltose and glucose.

**Brief Description of the Invention**

We have now found that low GI frozen confections which maintain an acceptable texture and level of sweetness can be formulated by using certain sweeteners whilst avoiding others. In particular, we have surprisingly found that frozen confections containing lactose have high GI values, even though lactose itself has a relatively low GI. Accordingly, in a first aspect, the present invention provides a frozen confection comprising (by weight of the confection):

- from 5 to 15 wt% of a sweetener selected from the group consisting of sugar alcohols, sucrose, fructose, and mixtures thereof;
- from 2 to 12 wt% non-digestible, non-starch complex saccharides;
- less than 2 wt% starch or starch derivatives;
- less than 3 wt% lactose; and
- at least 2 wt% milk protein,

wherein the milk protein is provided in the form of lactose-free whey powder.

Preferably the frozen confection comprises at least 2 wt% fat.
Preferably the frozen confection comprises less than 2 wt% sucrose.
Preferably the sweetener is maltitol and / or fructose.
Preferably the frozen confection does not comprise non-saccharide sweetners.
Preferably the non-digestible, non-starch complex saccharide is oligofructose containing 7 or fewer saccharide units.
Preferably the frozen confection comprises less than 0.5 wt% lactose.
Preferably the frozen confection comprises less than 1.5 wt% galactose.

Preferably the frozen confection has an overrun of from 20 to 150%.

Preferably the frozen confection has a glycemic index of less than 40.

In a related aspect, the present invention provides a process for manufacturing a frozen confection according to the first aspect of the invention, the process comprising the steps of:

(a) preparing a mix of ingredients; then
(b) pasteurising and optionally homogenising the mix; then
(c) freezing and optionally aerating the mix to produce the frozen confection.

**Detailed Description of the Invention**

The frozen confection of the invention is preferably an ice cream. Ice cream typically contains, by weight of the composition, 2-20% fat, 2-15% milk protein, 12-20% sweeteners, together with other minor ingredients such as stabilisers, emulsifiers, colours and flavourings. In ice creams or water ices according to the invention, the sugars found in a typical ice cream are replaced with sugar alcohol, fructose and / or sucrose in combination with non-digestible, non-starch complex saccharides, so that the frozen confection has a low glycemic index.

In order to provide sweetness and freezing point depression whilst not contributing too greatly to the glycemic index, the frozen confection comprises a sugar alcohol, sucrose, fructose or a mixture thereof in a total amount of at least 5% by weight of the frozen confection, preferably at least 6%, more preferably at least 7% and most preferably at least 8%. To avoid the product being excessively sweet, the frozen confection comprises the sugar alcohol, sucrose, fructose or a mixture thereof in a total amount of at most 15% by weight of the frozen confection, preferably at most 14%, more preferably at most 13%, most preferably at most 12%.

Sugar alcohols are suitable for use in low GI products since they do not cause appreciable increases in blood glucose levels when eaten. Preferred sugar alcohols are maltitol and xylitol. Maltitol is a sugar alcohol based on the disaccharide maltose. It has a high relative sweetness of 0.9 (compared to sucrose). Xylitol is a sugar alcohol based on xylose. It also has a high relative sweetness, i.e. 0.8. Neither maltitol nor xylitol causes off flavours often associated with other polyols such as glycerol or sorbitol. Both maltitol and xylitol have relatively high digestive tolerance compared to other polyols.

Fructose has a low GI value of 20. Sucrose has a moderate effect on blood glucose levels, with a GI of 60. Surprisingly we have found that sucrose can be used to make a low GI product, even though it has a moderately high GI value. However, in order to make a frozen confection having a very low glycemic index, for example less than 30, it is preferable not to use a substantial amount of sucrose, such as less than 2% by weight of the frozen confection.

Preferably the sweetener is selected from maltitol and / or fructose.

A further advantage of the present invention is that the frozen confection according to the present invention can be made with a very low amount of intensive non-saccharide sweetener.

Intensive Non-saccharide sweeteners have relative sweetness, which is higher than 1. Examples of intense sweeteners are aspartame, saccharin, acesulfame K, alitame, thaumatin, cyclamate, glycyrrhizin, stevioside, neohesperidine, sucralose, monellin and neotame.

It is nevertheless possible to add intensive non-saccharide sweeteners. Some of the non-saccharide sweeteners have far higher relative sweetness when compared to others.

As defined herein, relative sweetness $R_i$ refers to the sweetness of a substance relative to the sweetness of an equivalent weight of sucrose (i.e. sucrose has a relative sweetness of 1). The relative sweetness of the non-saccharide sweeteners is given in the following table.

| Non-Saccharide Sweetener (i) | Relative sweetness ($R_i$) |
|---|---|
| Aspartame | 200 |
| Saccharin | 400 |
| Acesulfame K | 200 |
| Alitame | 2,000 |
| Thaumatin | 2,000 |
| Cyclamate | 35 |
| Glycyrrhizin | 50 |
| Stevioside | 100 |

(continued)

| Non-Saccharide Sweetener (i) | Relative sweetness ($R_i$) |
|---|---|
| Neohesperidine | 1,500 |
| Sucralose | 500 |
| Monellin | 2,000 |
| Neotame | 10,000 |

For a mixture of intensive non-saccharide sweeteners, the relative sweetness, R is defined by the following equation:

$$R = \frac{\sum_{i} R_i m_i}{\sum_{i} m_i}$$

wherein $m_i$ is the mass of the intensive non-saccharide sweetener i.

In preferred embodiments of the present invention the intensive non-saccharide sweeteners are present in a total amount $C_T$ given by the following condition: $C_T < X/R$
wherein X is 0.5 wt % and R is the sweetness of the intensive non-saccharide sweeteners relative to sucrose expressed on a weight basis.

More preferably embodiments of the present invention comprise non-saccharide sweeteners chosen from the group consisting of aspartame, saccharin, acesulfame K, alitame, thaumatin, cyclamate, glycyrrhizin, stevioside, neohesperidine, sucralose, monellin and neotame in an amount of $C_T$.

Preferably, X is 0.1 wt %, more preferably 0.01 wt %.

Non-digestible, non-starch complex saccharides have a low GI value, and provide a source of sweetness and freezing point depression so they can be used to replace some of the sugars in ice cream. The non-digestible, non-starch complex saccharide is employed in an amount of at least 2% by weight of the frozen confection, preferably at least 3%, more preferably at least 4% and most preferably at least 5%. In order to avoid too firm a product (especially when the non-digestible, non-starch complex saccharide has a relatively high molecular weight) and / or digestive intolerance, the non-digestible saccharide is present in an amount of at most 12% by weight of the frozen confection, preferably at most 11 %, more preferably at most 10%, most preferably at most 9%.

Suitable non-digestible, non-starch complex saccharides include oligofructose, inulin, polydextrose and mixtures thereof. Oligofructose has between 2 and 7 fructose units. Oligofructose is obtained from inulin by partial enzymatic hydrolysis. Inulin has a metabolisable energy content (calorie conversion factor) of 1.2 kcal (5.0 kJ) $g^{-1}$, whilst oligfructose has a metabolisable energy content of 2 kcal (8.4 kJ) $g^{-1}$. Oligofructose and inulin are both available from the ORAFTI company under the trade names Raftlilose™ and Raftiline™, respectively. Inulin and oligofructose are composed of linear chains of fructose units linked by β(2-1) bonds and often terminated by a glucose unit. Inulin contains chains with up to 60 fructose units. Another form of oligofructose is kestose (available from Beghin-Meiji - Syral, Z.I. et Portuaire BP 32, 67390 Marckolsheim, France). Kestose consists of 3 fructose units, and therefore is particularly effective at providing freezing point depression. Polydextrose is a randomly bonded condensation polymer of D-glucose (dextrose) with some bound sorbitol and citric acid. The 1,6-glycosidic linkage predominates in the polymer. Polydextrose is resistant to digestion in the human small intestinal tract and has a metabolisable energy content of 1.0 kcal (4.2 kJ) $g^{-1}$. It is available from Danisco under the trade name Litesse™. Polydextrose has a relatively high molecular weight of around 2500.

Preferably the non-digestible, non-starch complex saccharide is a low molecular weight oligofructose, i.e. containing 7 or fewer saccharide units, e.g. Raftilose™ or kestose.Starch derivatives are easily metabolized in the body into glucose, thereby increasing blood glucose levels. Thus, in order to minimise the glycemic index, the frozen confection contains less than 2% starch derivatives by weight of the confection, preferably less than 1%, more preferably less than 0.5%, most preferably less than 0.1 %. In a preferred embodiment the frozen confection contains no starch derivatives.

Lactose has a relatively low GI value of 43. However, surprisingly, we have found that frozen confections containing lactose have high GI values. Thus, in order to minimise the glycemic index, the frozen confection contains less than 3% lactose by weight of the confection, preferably less than 2%, more preferably less than 1%, most preferably less than 0.5%.

It is believed that galactose (which is one of the monosaccharides produced when lactose is metabolized) also raises the GI of frozen confections in which it is present. Therefore the frozen confection preferably contains less than 1.5% galactose by weight of the confection, preferably less than 1%, more preferably less than 0.5%.

Frozen confections of the invention may comprise fat. In an preferred embodiment of the invention, the frozen confection has a fat content of at least 2% by weight of the frozen confection, preferably at least 4%, more preferably at least 7%; and at most 20%, preferably at most 15%, more preferably at most 12%. Suitable fats include, but are not limited to dairy fat, coconut oil, palm oil and sunflower oil.

Frozen confections of the invention may also comprise protein, preferably milk protein. Preferred sources of milk protein are those which do not contain a substantial amount of lactose, for example, low lactose milk protein concentrates e.g. Alaplex™ from Fonterra (Europe) GmbH, Hamburg, Germany. Preferably the source of milk protein is a lactose-free whey powder, by which is meant whey powder containing less than 1% lactose (by weight of the whey powder), more preferably less than 0.1 wt%. Other sources such as milk, concentrated milk, skimmed milk powder, whey, and whey powders which contain significant amounts of lactose, can be used, but only in amounts such that the lactose content of the frozen confection does not exceed 3%. In order to aid in emulsification and/or aeration during manufacture of the frozen confection, and to provide the desired texture, it is preferable that the protein content is at least 2% by weight of the frozen confection, preferably at least 3%, more preferably at least 4%. In order to prevent the texture of the confection from becoming chalky, it is also preferable that the protein content is at most 15% by weight of the frozen confection, preferably at most 12%, more preferably at most 10%.

Frozen confections of the invention may also comprise an emulsifier, such as mono- and di-glycerides of saturated or unsaturated fatty acids, lecithin and egg yolk. The frozen confections may also comprise a stabiliser, such as gelatine, locust bean gum, guar gum, agar, alginates, carrageenan, pectin, carboxymethyl cellulose, microcrystalline cellulose, dextran and xanthan. Preferably the emulsifier and stabiliser are each present at a level of 0.05 to 1% by weight of the frozen confection. In addition, the frozen confection may contain flavouring and/or colouring.

Preferably the frozen confection does not contain other materials which would increase the GI, such as pieces of, biscuit, wafer, caramel, chocolate or fruit sauces. These substances typically contain significant amounts of starch or starch derivatives.

The frozen confection may be aerated or unaerated. By unaerated is meant an overrun of less then 20%, preferably less than 10%. An unaerated frozen confection is not subjected to deliberate steps such as whipping to increase the gas content. Nonetheless, it will be appreciated that during the preparation of unaerated frozen confections, low levels of gas, such as air, may be incorporated in the product. Preferably the frozen confection is aerated. Aerated frozen confections have an overrun of more than 20%, preferably more than 50%, more preferably more than 75%. Preferably the frozen confection has an overrun of less than 200%, more preferably less than 150%, most preferably less than 120%.

The frozen confections provided by the present invention afford consumers the everyday enjoyment of a popular food together with the benefit of a low glycemic index. The frozen confections of the invention have a low glycemic index typically of less than 40, preferably less than 35, more preferably less than 30, most preferably less than 25.

The frozen confections of the invention also suitably provide a low GI base for delivering nutritional actives. Thus in a preferred embodiment the frozen confection is fortified with one or more nutritional actives. The nutritional actives may be for example a mineral, a vitamin, a pro-biotic, a pre-biotic, an antioxidant, an essential oil, a plant sterol, an appetite suppressant, or a bioactive peptide.

The frozen confections of the present invention are particularly suitable for storage and consumption from the domestic deep freeze. Thus it is preferred that the temperature of the frozen confection is below -12°C, more preferably below -14°C and most preferably in the range -25 to -16°C. In this temperature range most, but not all, of the water is frozen.

The frozen confections may be manufactured by any suitable process, for example a process comprising the steps of:

  (a) preparing a mix of ingredients; then
  (b) pasteurising and optionally homogenising the mix; then
  (c) freezing and optionally aerating the mix to produce the frozen confection.

The present invention will now be further described with reference to the following examples, which are illustrative only and non-limiting.

Examples

Example ice creams according to the invention were prepared using the formulations shown in Table 1.

Table 1 Ice cream formulations

| Ingredient (wt%) | 1 | 2 | 3 | 4 |
|---|---|---|---|---|
| Maltitol (Maltisorb) | 10.0 | 10.0 | 0 | 0 |
| Sucrose | 0 | 0 | 10.0 | 0 |
| Fructose | 0 | 0 | 0 | 10.0 |
| Inulin | 6.7 | 6.7 | 6.7 | 6.7 |
| Skimmed Milk Powder | 3.68 | 0 | 3.68 | 0 |
| Low Lactose Milk Protein | 3.68 | 7.36 | 3.68 | 7.36 |
| Coconut Oil | 9.0 | 9.0 | 5.0 | 9.0 |
| Emulsifier | 0.285 | 0.285 | 0.285 | 0.285 |
| Guar Gum | 0.0625 | 0.0625 | 0.0625 | 0.0625 |
| Locust Bean Gum | 0.145 | 0.145 | 0.145 | 0.145 |
| Carragenan | 0.0175 | 0.0175 | 0.0175 | 0.0175 |
| Vanillin | 0.011 | 0.011 | 0.011 | 0.011 |
| Vanilla Flavour | 0.16 | 0.16 | 0.16 | 0.16 |
| Beta carotene 30% | 0.0042 | 0.0042 | 0.0042 | 0.0042 |
| Water | to 100 | to 100 | to 100 | to 100 |

Maltitol was Maltisorb, supplied by Roquette, >99% pure. Inulin was Raftiline™ supplied by ORAFTI (Tienen, Belgium) and had a moisture content of 3.8 wt%. On a dry basis the inulin consisted of 92 wt% oligofructose and 8 wt% sugars (sucrose, fructose and glucose). Skimmed milk powder contained 50 wt% lactose, 35 wt% protein and 1 wt% milk fat with the remainder being ash and moisture. The low lactose milk protein concentrate was Alaplex 1380 PPV, supplied by Fonterra, and contains less than 0.1wt% lactose. The emulsifier was Grinsted Mono-Di HP 60 supplied by Danisco (Babard, Denmark) and contained 98 wt% saturated fatty acids.

All ingredients except for the oil and emulsifier were combined in an agitated heated mix tank. The oil was warmed to around 60°C and then the emulsifier was added to the oil prior to pouring into the mix tank. Once all of the ingredients were blended together, the mix was subjected to high shear mixing at a temperature of 65°C for 2 minutes. The mix was then passed through an homogeniser at 150 bar and 70°C and then subjected to pasteurisation at 83°C for 20 s before being rapidly cooled to 4°C by passing through a plate heat exchanger. The premix was then aged at 4°C for 5 hours in an agitated tank prior to freezing.

Each formulation was frozen using a typical ice cream freezer (scraped surface heat exchanger) operating with an open dasher (series 15), a mix flow rate of 150 litres / hour, an extrusion temperature of -7°C and an overrun of 100%. Directly from the freezer, the ice cream was filled into 250 ml cartons. The cartons were then hardened by blast freezing for 2 hours at -30°C before being transferred to a -25°C store for storage.

The glycemic index of the ice creams of examples 1 to 3 were measured by Leatherhead Food International, Leatherhead, Surrey, UK, using the method described above. The results are shown in Table 2.

Table 2 Glycemic Index measurements

| Example | 1 | 2 | 3 |
|---|---|---|---|
| GI value | 20 ± 7 | 23 ± 7 | 37 ± 7 |
| GI rating | Low | Low | Low |

On tasting, examples 1 - 4 were found to be firmer and less sweet than a conventional ice cream, but were nonetheless judged to be acceptable products. Thus by carefully selecting the type and amounts of sweeteners, and in particular avoiding starch derivatives and lactose, ice creams with very low glycemic indices and acceptable sweetness and texture were obtained.

The various features and embodiments of the present invention, referred to in individual sections above apply, as appropriate, to other sections, mutatis mutandis. Consequently features specified in one section may be combined with features specified in other sections, as appropriate.

All publications mentioned in the above specification are herein incorporated by reference. Various modifications and variations of the described methods and products of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

**Claims**

1. A frozen confection comprising by weight of the confection:

   • from 5 to 15 wt% of a sweetener selected from the group consisting of sugar alcohols, sucrose, fructose, and mixtures thereof;
   • from 2 to 12 wt% non-digestible, non-starch complex saccharides;
   • less than 2 wt% starch or starch derivatives;
   • less than 3 wt% lactose; and
   • at least 2 wt% milk protein,

   wherein the milk protein is provided in the form of lactose-free whey powder.

2. A frozen confection according to claim 1 which comprises at least 2 wt% fat.

3. A frozen confection according to any of claims 1 to 2 which comprises less than 2 wt% sucrose.

4. A frozen confection according to any of claims 1 to 3 wherein the sweetener is maltitol and / or fructose.

5. A frozen confection according to any of claims 1 to 4 comprising non-saccharide sweeteners chosen from the group consisting of aspartame, saccharin, acesulfame K, alitame, thaumatin, cyclamate, glycyrrhizin, stevioside, neohesperidine, sucralose, monellin and neotame in an amount of $C_T < X/R$, wherein X is 0.5% and R is the relative sweetness.

6. A frozen confection according to of claims 1 to 5 wherein the non-digestible, non-starch complex saccharide is oligofructose containing 7 or fewer saccharide units.

7. A frozen confection according to any of claims 1 to 6 comprising less than 0.5 wt% lactose.

8. A frozen confection according to any of claims 1 to 7 comprising less than 1.5 wt% galactose.

9. A frozen confection according to any of claims 1 to 8 having an overrun of from 20 to 150%.

10. A frozen confection according to any of claims 1 to 9 having a glycemic index of less than 40.

11. A process for manufacturing a frozen confection according to any of claims 1 to 10, the process comprising the steps of:

    (a) preparing a mix of ingredients; then
    (b) pasteurising and optionally homogenising the mix; then
    (c) freezing and optionally aerating the mix to produce the frozen confection.

**Patentansprüche**

1. Gefrorene Süßware, umfassend, bezogen auf das Gewicht der Süßware:

   • 5 bis 15 Gewichts-% eines Süßungsmittels, ausgewählt aus der Gruppe, bestehend aus Zuckeralkoholen, Saccharose, Fructose und Gemischen davon;

• 2 bis 12 Gewichts-% nicht-verdauliche, komplexe Nicht-Stärke-Saccharide;
• weniger als 2 Gewichts-% Stärke oder Stärkederivate;
• weniger als 3 Gewichts-% Lactose und
• wenigstens 2 Gewichts-% Milchprotein,

wobei das Milchprotein in der Form von lactosefreiem Molkepulver bereitgestellt wird.

2. Gefrorene Süßware nach Anspruch 1, die wenigstens 2 Gewichts-% Fett umfasst.

3. Gefrorene Süßware nach einem der Ansprüche 1 bis 2, die weniger als 2 Gewichts-% Saccharose umfasst.

4. Gefrorene Süßware nach einem der Ansprüche 1 bis 3, wobei das Süßungsmittel Maltit und/oder Fructose ist.

5. Gefrorene Süßware nach einem der Ansprüche 1 bis 4, umfassend Nicht-Saccharid-Süßungsmittel, ausgewählt aus der Gruppe, bestehend aus Aspartam, Saccharin, Acesulfam K, Alitam, Thaumatin, Cyclamat, Glycyrrhizin, Steviosid, Neohesperidin, Sucralose, Monellin und Neotam in einer Menge von $C_t < X/R$, worin X 0,5 % ist und R die relative Süße ist.

6. Gefrorene Süßware nach den Ansprüchen 1 bis 5, wobei das nicht-verdauliche, komplexe Nicht-Stärke-Saccharid Oligofructose ist, die 7 oder weniger Saccharid-Einheiten enthält.

7. Gefrorene Süßware nach einem der Ansprüche 1 bis 6, die weniger als 0,5 Gewichts-% Lactose umfasst.

8. Gefrorene Süßware nach einem der Ansprüche 1 bis 7, die weniger als 1,5 Gewichts-% Galactose umfasst.

9. Gefrorene Süßware nach einem der Ansprüche 1 bis 8, die einen Aufschlag von 20 bis 150 % hat.

10. Gefrorene Süßware nach einem der Ansprüche 1 bis 9, die einen glykämischen Index von weniger als 40 hat.

11. Verfahren zur Herstellung einer gefrorenen Süßware nach einem der Ansprüche 1 bis 10, wobei das Verfahren die Schritte:

(a) Herstellen einer Mischung von Ingredienzien, danach
(b) Pasteurisieren und gegebenenfalls Homogenisieren der Mischung, dann
(c) Gefrieren und gegebenenfalls Schäumen der Mischung unter Herstellung der gefrorenen Süßware

umfasst.

**Revendications**

1. Confiserie congelée comprenant en poids de la confiserie :

• de 5 à 15 % en poids d'un édulcorant choisi dans le groupe consistant en les sucres-alcools, le saccharose, le fructose, et leurs mélanges ;
• de 2 à 12 % en poids de saccharides complexes non digestibles autres que l'amidon ;
• moins de 2 % en poids d'amidon ou de dérivés d'amidon ;
• moins de 3 % en poids de lactose ; et
• au moins 2 % en poids de protéine du lait,

où la protéine du lait est fournie sous la forme de lactosérum en poudre sans lactose.

2. Confiserie congelée selon la revendication 1, qui comprend au moins 2 % en poids de graisse.

3. Confiserie congelée selon l'une quelconque des revendications 1 à 2, qui comprend moins de 2 % en poids de saccharose.

4. Confiserie congelée selon l'une quelconque des revendications 1 à 3, dans laquelle l'édulcorant est le maltitol et/ou le fructose.

5. Confiserie congelée selon l'une quelconque des revendications 1 à 4, comprenant des édulcorants non-saccharidiques, choisis dans le groupe consistant en l'aspartame, la saccharine, l'acésulfame K, l'alitame, la thaumatine, le cyclamate, la glycyrrhizine, le stévioside, la néohespéridine, le sucralose, la monelline et le néotame dans une quantité de $C_T < X/R$, où X vaut 0,5 % et R est la sucrosité relative.

6. Confiserie congelée selon l'une quelconque des revendications 1 à 5, dans laquelle le saccharide complexe non digestible autre que l'amidon est un oligofructose contenant 7 motifs saccharide ou moins.

7. Confiserie congelée selon l'une quelconque des revendications 1 à 6, comprenant moins de 0,5 % en poids de lactose.

8. Confiserie congelée selon l'une quelconque des revendications 1 à 7, comprenant moins de 1,5 % en poids de galactose.

9. Confiserie congelée selon l'une quelconque des revendications 1 à 8, ayant un taux de foisonnement de 20 à 150 %.

10. Confiserie congelée selon l'une quelconque des revendications 1 à 9, ayant un index glycémique de moins de 40.

11. Procédé de fabrication d'une confiserie congelée selon l'une quelconque des revendications 1 à 10, le procédé comprenant les étapes consistant à :

(a) préparer un mélange d'ingrédients ; puis
(b) pasteuriser et homogénéiser facultativement le mélange ; puis
(c) congeler et aérer facultativement le mélange pour produire la confiserie congelée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0933029 A

### Non-patent literature cited in the description

- Diet, nutrition and the prevention of chronic diseases. *Report of a Joint WHO/FAO Expert Consultation, WHO Technical Report Series 916,* 2003
- **ROBERT T. MARSHALL ; H. DOUGLAS GOFF ; RICHARD W. HARTEL.** Ice Cream. Kluwer Academic/Plenum Publishers, 2003
- the International Table of Glycemic Index and Glycemic Load Values: 2002. *American Journal of Clinical Nutrition,* 2002, vol. 76 (1), 5-56